# EUROPEAN PATENT APPLICATION

(11) **EP 4 524 442 A1**
(43) Date of publication of application: **19.03.2025**
(21) Application number: 23871321.8
(22) Date of filing: 16.06.2023
(51) Int. Cl.: F16L 11/10, C08K 5/435, C08K 5/44, C08K 5/46, C08L 9/00

(54) **INDUSTRIAL HOSE**

(30) Priority: 29.09.2022 JP 2022156666
(71) Applicant: Sumitomo Riko Company Limited, Komaki-shi, Aichi 485-8550 (JP); Sumitomo Riko Hosetex, Ltd., Ayabe-shi, Kyoto 623-0177 (JP)
(72) Inventor: NOZUE Ayami, Komaki-shi, Aichi 485-8550 (JP); KAMIO Ren, Komaki-shi, Aichi 485-8550 (JP); KAWAI Koichiro, Ayabe-shi, Kyoto 623-0177 (JP); FUKATSU Kosuke, Ayabe-shi, Kyoto 623-0177 (JP)
(74) Representative: Müller-Boré & Partner Patentanwälte PartG mbB
(86) International application number: PCT/JP2023/022401
(87) International publication number: WO 2024/070076

(57) **Abstract**

Provided is an industrial hose that has excellent adhesion between a rubber layer and a reinforcement layer including a plated wire and also excellent heat resistance.

The industrial hose includes a rubber layer including a rubber composition and a reinforcement layer including a plated wire, the reinforcement layer being in contact with the rubber layer,
wherein the rubber composition contains components (A)-(D) below, an amount of the component (C) is 0.5-1.0 parts by mass and an amount of the component (D) is 1.0-3.0 parts by mass per 100 parts by mass of the component (A), a mass ratio [(C)/(B)] of the component (C) to the component (B) is 0.5-1.0, and a mass ratio [(D)/{(B)+(C)+(D)}] of the component (D) to a total amount of the components (B)-(D) is 0.3-0.6:
(A) a diene rubber;
(B) at least one of sulfenamide vulcanization accelerator and thiazole vulcanization accelerator;
(C) N-phenyl-N-(trichloromethylthio)benzenesulfonamide; and
(D) sulfur.

## Description

### TECHNICAL FIELD

The present disclosure relates to an industrial hose including a rubber layer and a reinforcement layer including a plated wire.
More particularly, the present disclosure relates to an industrial hose, for example, a high-pressure hydraulic hose for industrial machinery such as construction machinery and mining machinery, and various hoses for an automobile, the industrial hose including a rubber layer and a reinforcement layer including a plated wire, wherein the reinforcement layer is in contact with the rubber layer.

### BACKGROUND ART

An industrial hose used for construction machinery, mining machinery, and the like has a rubber layer and a reinforcement layer including a plated wire so as to withstand high pressure. Insufficient adhesion between the reinforcement layer and the rubber layer will make the plated wire move or loosen, causing a negative effect on durability. Therefore, it is necessary to firmly bond the reinforcement layer including a plated wire to the rubber layer that is in contact with the reinforcement layer.

As a method using no adhesive (adhesiveless method) to firmly bond the reinforcement layer to the rubber layer, for example, there is a method that develops adhesion between the reinforcement layer and the rubber layer, wherein the reinforcement layer includes a copper containing wire, such as a brass (copper-zinc alloy) plated wire, a diene rubber composition is used as a material for the rubber layer, and a section of the rubber layer near an interface with the reinforcement layer becomes a copper sulfide containing layer by chemical bonding between sulfur as a vulcanizing agent in the material for the rubber layer and copper ions (Cu) in the reinforcement layer. However, when a large amount of sulfur is added to the diene rubber composition, adhesion is improved due to increased bonding between the copper and the sulfur but heat resistance tends to be reduced. Particularly, in a hose through which a high-temperature fluid (for example, hydraulic oil at 100°C or higher, etc.) flows, such as a high-pressure hydraulic hose for industrial machinery, thermal degradation due to reduced heat resistance is a serious problem.

Meanwhile, as a method using an adhesive to improve adhesion between the reinforcement layer and the rubber layer, for example, proposed is a hose including a rubber layer obtained by combining an adhesive such as resorcin and hexamethylenetetramine into a raw material rubber that can be subjected to sulfur vulcanization (PTL 1). Furthermore, for example, also proposed is a hose including a rubber layer obtained by combining a cobalt compound as an adhesive into acrylonitrile butadiene rubber (PTL 2). However, both PTL 1 and PTL 2 are still insufficient from the viewpoint of achieving both the adhesion and heat resistance.

### RELATED ART DOCUMENT

### PATENT DOCUMENT

PTL 1: JP-A-H06-84793
PTL 2: JP-A-2011-1524

### SUMMARY

### PROBLEMS TO BE SOLVED BY THE DISCLOSURE

Along with a high need for adhesion (peeling resistance) between a rubber layer and a reinforcement layer of an industrial hose in recent years, it is difficult to achieve a high level
of both the adhesion and heat resistance by conventional methods, and there is a strong demand for development of a new method.

The present disclosure has been made in view of such circumstances, and provides an industrial hose that has excellent adhesion between a rubber layer and a reinforcement layer including a plated wire and also has excellent heat resistance.

### MEANS FOR SOLVING THE PROBLEMS

The present inventors have made extensive investigations in order to solve the above-mentioned problems. In the course of the investigations, the inventors have focused on the behavior of sulfur in a vulcanization system from the viewpoint of achieving a high level of both adhesion and heat resistance, and considered a method for controlling distribution of sulfur after vulcanization. As a result of further investigations from such viewpoint, the present inventors have found that an industrial hose having excellent adhesion between a reinforcement layer including a plated wire and a rubber layer and also having excellent heat resistance can be obtained by using a specific vulcanization accelerator and N-phenyl-N-(trichloromethylthio)benzenesulfonamide and controlling blending amounts of such components, sulfur, etc. to a specific range.

That is, the summary of the present disclosure is the following [1]-[4].
[1] An industrial hose including a rubber layer including a rubber composition and a reinforcement layer including a plated wire, the reinforcement layer being in contact with the rubber layer,
   wherein the rubber composition contains components (A)-(D) below,
      (A) a diene rubber;
      (B) at least one of sulfenamide vulcanization accelerator and thiazole vulcanization accelerator;
      (C) N-phenyl-N-(trichloromethylthio)benzenesulfonamide; and
      (D) sulfur,
   wherein an amount of the component (C) is 0.5-1.0 parts by mass and an amount of the component (D) is 1.0-3.0 parts by mass per 100 parts by mass of the component (A),
   wherein a mass ratio [(C)/(B)] of the component (C) to the component (B) is 0.5-1.0, and
   wherein a mass ratio [(D)/{(B)+(C)+(D)}] of the component (D) to a total amount of the components (B)-(D) is 0.3-0.6.
[2] The industrial hose according to [1], wherein a peak intensity of a sulfur element measured by energy dispersive X-ray spectroscopy (EDX) is higher in an area of the rubber layer that is within a range of 50 µm from a contact surface with the reinforcement layer than a peak intensity of a sulfur element measured in an area of the rubber layer that is outside the range.
[3] The industrial hose according to [1] or [2], wherein the diene rubber (A) is one or more selected from the group consisting of acrylonitrile butadiene rubber, butadiene rubber, styrene-butadiene rubber, and natural rubber.
[4] The industrial hose according to any one of [1]-[3], wherein the rubber composition does not contain one or more adhesives selected from the group consisting of a cobalt adhesive, a melamine adhesive, and a resorcin adhesive.

### EFFECTS OF THE DISCLOSURE

The present disclosure can provide an industrial hose that has excellent adhesion between a rubber layer and a reinforcement layer including a plated wire and also has excellent heat resistance.

### BRIEF DESCRIPTION OF DRAWINGS

FIG. 1 is a schematic diagram illustrating one example of an industrial hose according to an embodiment of the present disclosure.
FIG. 2 is a schematic diagram illustrating one example of an industrial hose according to an embodiment of the present disclosure.
FIG. 3 is a schematic diagram illustrating one example of an industrial hose according to an embodiment of the present disclosure.
FIG. 4 is a diagram illustrating a peeling test for evaluating adhesion.

### EMBODIMENTS OF THE DISCLOSURE

Next, embodiments of the present disclosure will be described in detail. However, the present disclosure is not limited to these embodiments.

Note that "X and/or Y" (X and Y are each a given configuration) as described herein means at least one of X and Y, including three meanings of only X, only Y, and X and Y.

An industrial hose according to one embodiment of the present disclosure (hereinafter may be referred to as "present hose") is characterized by including a rubber layer including a rubber composition (hereinafter may be referred to as "present rubber composition") and a reinforcement layer including a plated wire, the reinforcement layer being in contact with the rubber layer, wherein the rubber composition contains components (A)-(D) below, an amount of the component (C) is 0.5-1.0 parts by mass and an amount of the component (D) is 1.0-3.0 parts by mass per 100 parts by mass of the component (A), a mass ratio [(C)/(B)] of the component (C) to the component (B) is 0.5-1.0, and a mass ratio [(D)/{(B)+(C)+(D)}] of the component (D) to a total amount of the components (B)-(D) is 0.3-0.6:
(A) a diene rubber;
(B) at least one of sulfenamide vulcanization accelerator and thiazole vulcanization accelerator;
(C) N-phenyl-N-(trichloromethylthio)benzenesulfonamide; and
(D) sulfur.

The present hose has excellent adhesion between the reinforcement layer including a plated wire and the rubber layer and also has excellent heat resistance. Although the reason why the present hose is capable of achieving a high level of both the adhesion and the heat resistance is not entirely clear, the present inventors presume as follows. That is, the present inventors presume that by controlling the amounts and the content ratios of the above components (A)-(D) to the specific ranges, the N-phenyl-N-(trichloromethylthio)benzenesulfonamide (C) appropriately suppresses interaction between the specific vulcanization accelerator (B) and the sulfur (D) while exhibiting a predetermined vulcanization accelerating function; thus, an appropriate amount of the sulfur (D) contained in the rubber layer in a predetermined amount is transferred in advance to the reinforcement layer side to sufficiently form an adhesive layer while an appropriate amount of the remaining sulfur (D) is used to subsequently accelerate vulcanization, thereby causing a specific distribution state of the sulfur present in the rubber layer after crosslinking; as a result, a high level of both the adhesion and the heat resistance can be achieved.

As an example of more specific consideration, it is presumed, for example, that the N-phenyl-N-(trichloromethylthio)benzenesulfonamide (C) (see (b) in Formula 1 below) and 2-mercaptobenzothiazole (MBT) as the thiazole vulcanization accelerator (B) (see (a) in Formula 1 below) in a specific content ratio are chemically reacted with each other, so that the vulcanization accelerating function of the component (B) after the chemical reaction is appropriately suppressed (see (a) in Formula 2 below) while the component (C) after the chemical reaction becomes basic and exhibits a vulcanization function (see (b) in Formula 2 below); thus, an appropriate amount of the sulfur (D) contained in the rubber layer reacts in advance with the copper plating of the plated wire constituting the reinforcement layer to generate copper sulfate or the like to form an adhesive layer, while an appropriate amount of the remaining sulfur (D) is used to subsequently accelerate vulcanization to express relatively more monosulfide and disulfide crosslinked structures, thereby increasing a sulfur concentration near the plated wire in the crosslinked rubber layer; and as a result, a high level of both the adhesion and the heat resistance can be achieved.

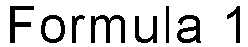

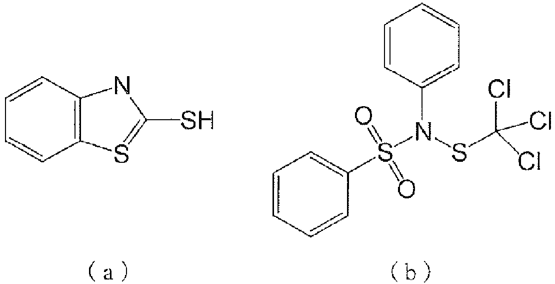

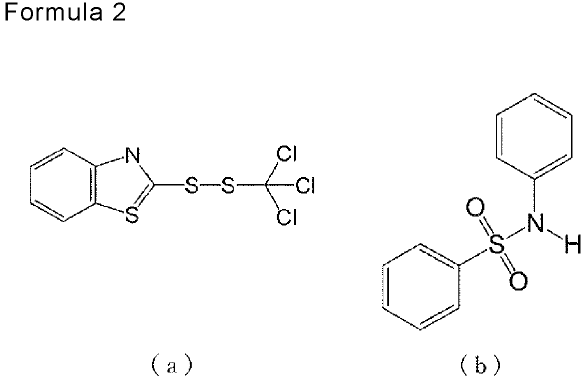

Hereinafter, the present hose will be described in detail.

The present hose includes at least a rubber layer including the present rubber composition, and a reinforcement layer including a plated wire. That is, the present hose may be a hose having a laminate structure in which the rubber layer including the present rubber composition is formed on the outside and/or the inside of the reinforcement layer including a plated wire, and other layer configurations and the numbers of layers are not particularly limited.

### <Rubber Layer>

As described above, the rubber layer of the present hose is a rubber layer including a rubber composition containing diene rubber (A), at least one of the sulfenamide vulcanization accelerator and the thiazole vulcanization accelerator (B), N-phenyl-N-(trichloromethylthio)benzenesulfonamide (C), and sulfur (D), wherein an amount of the component (C) is 0.5-1.0 parts by mass and an amount of the component (D) is 1.0-3.0 parts by mass per 100 parts by mass of the component (A), a mass ratio [(C)/(B)] of the component (C) to the component (B) is 0.5-1.0, and a mass ratio [(D)/{(B)+(C)+(D)}] of the component (D) to a total amount of the components (B)-(D) is 0.3-0.6.

### <<Diene Rubber (A)>>

Examples of the diene rubber (A) include natural rubber (NR), styrene-butadiene rubber (SBR), acrylonitrile butadiene rubber (NBR), isoprene rubber (IR), butadiene rubber (BR), and the like. These can be used alone or in combination of two or more.

When the present rubber composition is used as an inner rubber layer, NBR is preferably used as the diene rubber (A) from the viewpoint of improving oil resistance to hydraulic oil, etc. flowing through the hose. Furthermore, when the present rubber composition is used as the inner rubber layer, the NBR preferably has an acrylonitrile amount (AN amount) of 10-33% by mass and more preferably the AN amount of 10-28% by mass from the viewpoint of achieving all of the oil resistance, adhesion, and cold resistance.

The amount of the diene rubber (A) is, for example, equal to or more than 30% by mass, preferably 30-80% by mass, more preferably 32-70% by mass, and even more preferably 35-55% by mass per total amount of the present rubber composition (100% by mass).

### <<Sulfenamide Vulcanization Accelerator or Thiazole Vulcanization Accelerator (B)>>

The present rubber composition contains at least one of the sulfenamide vulcanization accelerator (b1) and the thiazole vulcanization accelerator (b2) as a vulcanization accelerator. In other words, the present rubber composition contains the sulfenamide vulcanization accelerator (b1), or the thiazole vulcanization accelerator (b2), or both.

Examples of the sulfenamide vulcanization accelerator (b1) include N-oxydiethylene-2-benzothiazolylsulfenamide (NOBS), N-cyclohexyl-2-benzothiazolylsulfenamide (CBS), N-t-butyl-2-benzothiazoylsulfenamide (BBS), N,N'-dicyclohexyl-2-benzothiazoylsulfenamide, and the like. These can be used alone or in combination of two or more. Among these, N-oxydiethylene-2-benzothiazolylsulfenamide (NOBS) and N-cyclohexyl-2-benzothiazolylsulfenamide (CBS) are preferably used.

Examples of the thiazole vulcanization accelerator (b2) include dibenzothiazyl disulfide (MBTS), 2-mercaptobenzothiazole (MBT), 2-mercaptobenzothiazole sodium salt (NaMBT), 2-mercaptobenzothiazole zinc salt (ZnMBT), 2-(4'-morpholinodithio)benzothiazole, and the like. These can be used alone or in combination of two or more. Among these, dibenzothiazyl disulfide (MBTS) and 2-mercaptobenzothiazole (MBT) are preferably used.

The amount of the component (B) is preferably 0.8-3.0 parts by mass, more preferably 1.0-2.5 parts by mass, and even more preferably 1.0-2.0 parts by mass per 100 parts by mass of the diene rubber (A), for example, from the viewpoint of improved effects of the present disclosure.

### <<N-Phenyl-N-(Trichloromethylthio)Benzenesulfonamide (C)>>

It is important to control the amount of the component (C) to a specific range of 0.5-1.0 parts by mass per 100 parts by mass of the diene rubber (A) from the viewpoint of providing the effects of the present disclosure. When the amount of the component (C) is out of the above range, it is difficult to achieve both the adhesion between the rubber layer and the reinforcement layer including a plated wire and heat resistance. In other words, when the amount of the component (C) is too large, the adhesion tends to be reduced, whereas when the amount of the component (C) is too small, the heat resistance and/or the adhesion tend to be reduced.

The amount of the component (C) can appropriately be set within the specific range of 0.5-1.0 parts by mass per 100 parts by mass of the diene rubber (A). For example, it can be 0.6-1.0 parts by mass or 0.7-0.9 parts by mass.

It is important that a mass ratio [(C)/(B)] of the component (C) to the component (B) is in a range of 0.5-1.0. If the mass ratio [(C)/(B)] is out of the above range, it is difficult to achieve both the adhesion between the rubber layer and the reinforcement layer including a plated wire and the heat resistance. In other words, when the mass ratio [(C)/(B)] is too small, the adhesion tends to be reduced.

The mass ratio [(C)/(B)] can appropriately be set within the specific range of 0.5-1.0, and it can be 0.5-0.9 or 0.5-0.8, for example.

### <<Sulfur (D)>>

It is important to control the amount of the sulfur (D) to a specific range of 1.0-3.0 parts by mass per 100 parts by mass of the diene rubber (A). If the amount of the component (D) is out of the above range, it is difficult to achieve both the adhesion between the rubber layer and the reinforcement layer including a plated wire and the heat resistance. In other words, when the amount of the component (D) is too small, the adhesion tends to be reduced, whereas when the amount of the sulfur is too large, the heat resistance tends to be reduced.

The amount of the component (D) can appropriately be set within the specific range of 1.0-3.0 parts by mass per 100 parts by mass of the diene rubber (A), and can be 1.0-2.5 parts by mass or 1.2-2.0 parts by mass, for example.

Insoluble sulfur or soluble sulfur can be used as the sulfur (D). Examples of the insoluble sulfur include polymeric sulfur such as µ-sulfur, π-sulfur, and w-sulfur. These can be used alone or in combination of two or more. Commercial products thereof include Sanfel (produced by Sanshin Chemical Industry Co., Ltd.), Sanfel EX (produced by Sanshin Chemical Industry Co., Ltd.), and the like.

Furthermore, examples of the soluble sulfur include sulfur having a ring structure such as α-sulfur, β-sulfur, γ-sulfur, and λ-sulfur. These can be used alone or in combination of two or more. Commercial products thereof include GOLDEN FLOWER sulfur powder (produced by Tsurumi Chemical Industry Co., Ltd.), Sulfur Powder S (produced by Hosoi Chemical Industry Co., Ltd.), and the like.

Note that the insoluble sulfur refers to sulfur with insolubility of equal to or more than 90% by mass in carbon disulfide. Further, the soluble sulfur refers to sulfur with solubility of equal to or more than 99.5% by mass in carbon disulfide.

It is important that a mass ratio [(D)/{(B)+(C)+(D)}] of the component (D) to a total amount of the components (B)-(D) is in a range of 0.3-0.6. If the mass ratio [(D)/{(B)+(C)+(D)}] is out of the above range, it is difficult to achieve both the adhesion between the rubber layer and the reinforcement layer including a plated wire and the heat resistance.

### <<Other Components>>

In addition to the above components (A)-(D), optional materials such as a filler, a plasticizer, an antioxidizing agent, and a vulcanization aid may be added to the present rubber composition as necessary.

### (Filler)

Examples of the filler include carbon black, silica, calcium carbonate, and the like. These can be used alone or in combination of two or more. Among these, carbon black is preferred from the viewpoint of improved durability.

Examples of the carbon black include various grades carbon black, such as SAF, ISAF, HAF, MAF, FEF, GPF, SRF, FT, and MT grades. These can be used alone or in combination of two or more.

The carbon black has a BET specific surface area of preferably 10-150 m²/g, more preferably 15-100 m²/g, and even more preferably 20-80 m²/g.

Note that the BET specific surface area of the carbon black can be measured by, for example, a BET specific surface area measurement device (4232-II produced by Micro Data Co., Ltd.) using a mixed gas (N₂: 70%, He: 30%) as an adsorption gas after degassing a sample at 200°C for 15 minutes.

An iodine adsorption number of the carbon black is preferably 10-150 mg/g, more preferably 10-75 mg/g, and even more preferably 20-65 mg/g. Additionally, a DBP (dibutyl phthalate) absorption number of the carbon black is preferably 20-180 mL/100 g, more preferably 20-150 mL/100 g.

Note that the iodine adsorption number of the carbon black refers to a value measured in conformity with JIS K 6217-1 (Method A), and the DBP absorption number of the carbon black refers to a value measured in conformity with JIS K6217-4.

Although not particularly limited, the filler content is preferably 40-150 parts by mass, more preferably 50-140 parts by mass, and even more preferably 60-130 parts by mass per 100 parts by mass of the diene rubber (A), for example.

Note that when the carbon black is used in combination with calcium carbonate, a content ratio of the calcium carbonate to the carbon black (calcium carbonate/carbon black) is preferably 1/99-20/80, more preferably 5/95-15/85, for example.

### (Plasticizer)

The plasticizer can be selected as appropriate depending on the type of the diene rubber, etc. Examples thereof include aromatic oil, ether-ester plasticizers, process oil, and the like. These can be used alone or in combination of two or more.

Examples of the aromatic oil include: Diana Process AC-12, Diana Process AC-460, and Diana process AH-16 (all produced by Idemitsu Showa Shell K.K.); JSO AROMA 790 (produced by Japan Sun Oil Company, Ltd.); Aromax 1 and Aromax 3 (all produced by Fuji Kosan Company, LTD.); and the like. Furthermore, the ether-ester plasticizers include plasticizers having both ether and ester bonds in one molecule. Specific examples thereof include adipic acid ether-ester plasticizers such as bis[2-(2-butoxyethoxy)ethyl]adipate, and the like. Furthermore, examples of the process oil include naphthenic oil, paraffinic oil, and the like.

The plasticizer content is, but not particularly limited to, 5-20 parts by mass, preferably 5-18 parts by mass, and more preferably 8-15 parts by mass per 100 parts by mass of the diene rubber (A), for example.

### (Antioxidizing Agent)

Examples of the antioxidizing agent include carbamate antioxidizing agents, phenylenediamine antioxidizing agents, phenol antioxidizing agents, phenylamine antioxidizing agents, diphenylamine antioxidizing agents, quinoline antioxidizing agents, imidazole antioxidizing agents, waxes, and the like. These can be used alone or in combination of two or more.

The antioxidizing agent content is, but not particularly limited to, 0.5-10 parts by mass, preferably 1-8 parts by mass, and more preferably 1.5-6 parts by mass per 100 parts by mass of the diene rubber (A), for example.

### (Vulcanization Aid)

Examples of the vulcanization aid include zinc oxide, flowers of zinc (ZnO), stearic acid, magnesium oxide, and the like. These can be used alone or in combination of two or more.

The vulcanization aid content is, but not particularly limited to, 1-12 parts by mass, preferably 2-10 parts by mass, and more preferably 3-8 parts by mass per 100 parts by mass of the diene rubber (A), for example.

### (Adhesive)

When the present rubber composition contains an adhesive, adhesion is improved but heat resistance tends to be reduced. Therefore, the present rubber composition preferably contains no adhesive. Furthermore, when an adhesive is contained, there are various manufacturing concerns, such as a problem that the rubber composition tends to adhere to a mandrel (iron core, etc.) in a production process of a hose, thereby disturbing extrusion molding. Therefore, it is preferable to contain no adhesive. The phrase "contain no adhesive" herein means that the total amount of the adhesive contained in a total amount of the present rubber composition (100% by mass) is less than 0.5% by mass. More preferably, the total amount of the adhesive is less than 0.3% by mass, more preferably less than 0.1% by mass, even more preferably less than 0.05% by mass, and particularly preferably 0% by mass.

Specifically, it is preferable that the present rubber composition does not contain one or more adhesives selected from the group consisting of a cobalt adhesive, a melamine adhesive, and a resorcin adhesive. In other words, a total amount of the cobalt adhesive, the melamine adhesive, and the resorcin adhesive contained in the total amount of the present rubber composition (100% by mass) is preferably less than 0.5% by mass, more preferably less than 0.3% by mass, even more preferably less than 0.1% by mass, and particularly preferably 0% by mass.

Examples of the cobalt adhesive include cobalt naphthenate, cobalt stearate, cobalt borate, cobalt oleate, cobalt maleate, and the like. Examples of the resorcin adhesive include resorcin and resorcin derivatives such as resorcin-formaldehyde obtained by condensation between resorcin and formaldehyde. Examples of the melamine adhesive include hexamethoxymethylmelamine and the like.

### (Preparation of Rubber Composition)

The present rubber composition can be prepared, for example, by appropriately combining the above components (A)-(D) and if necessary, various optional materials as described above, and kneading them using a kneading machine such as a kneader, a roller mill, or a Banbury mixer. The rubber composition prepared in the above manner is used as a material for constituting the rubber layer that is in contact with the reinforcement layer including a plated wire.

### <Reinforcement Layer>

The present hose has the reinforcement layer including a plated wire to reinforce strength of the entire hose. Specifically, the reinforcement layer is a layer prepared by braiding a plated wire in a braided or spiral shape.

As a wire (strand) to be plated, a metal wire, particularly a steel wire and the like, is suitably used. Furthermore, examples of plating include copper plating, zinc plating, brass (copper-zinc alloy) plating, nickel plating, tin plating, cobalt plating, and the like. Among these, brass (copper-zinc alloy) plating is preferred. A content ratio of copper to zinc (Cu/Zn) in the brass (copper-zinc alloy) plating is, but not particularly limited to, 70/30-55/45, preferably 70/30-60/40, for example.

A diameter of the plated wire is typically 0.15-1.00 mm, preferably 0.20-0.80 mm.

### <Layered Structure>

The present hose includes at least the rubber layer including the present rubber composition and the reinforcement layer including a plated wire. It may be an industrial hose having a layered structure in which the rubber layer including the present rubber composition is on the outside and/or the inside of the reinforcement layer including a plated wire. Other layer configurations and the number of layers are not particularly limited.

Specific examples of the layered structure of the present hose include the followings, but are not particularly limited thereto. One example is an industrial hose having a three-layer structure of "inner rubber layer/reinforcement layer/outer rubber layer", wherein the inner rubber layer is the rubber layer including the present rubber composition. Another example is an industrial hose having a four-layer structure of "inner rubber layer/intermediate rubber layer/reinforcement layer/outer rubber layer", wherein the intermediate rubber layer is the rubber layer including the present rubber composition. Another example is an industrial hose having a five-layer structure of "inner rubber layer/reinforcement layer 1/intermediate rubber layer/reinforcement layer 2/outer rubber layer", wherein one or both of the inner rubber layer and the intermediate rubber layer is the rubber layer including the present rubber composition. Another example is an industrial hose having a seven-layer structure of "inner rubber layer/reinforcement layer 1/intermediate rubber layer 1/reinforcement layer 2/intermediate rubber layer 2/reinforcement layer 3/outer rubber layer", wherein some (one or two layers) or all of the inner rubber layer, the intermediate rubber layer 1, and the intermediate rubber layer 2 are the rubber layers including the present rubber composition.

Although not particularly limited, an inner diameter of the present hose is typically 5-85 mm, preferably 6-80 mm. Additionally, an outer diameter of the present hose is typically 9-100 mm, preferably 10-85 mm.

Furthermore, the thickness of each layer is not particularly limited. The thickness of the inner rubber layer is, for example, 0.7-4.0 mm, preferably 1.0-3.0 mm. The thickness of the entire intermediate rubber layers is, for example, 0.1-0.5 mm, preferably 0.2-0.4 mm. The thickness of the outer rubber layer is, for example, 0.5-2.5 mm, preferably 0.8-2.0 mm.

### (Peak Intensity of Sulfur Element)

A peak intensity of a sulfur element measured by energy dispersive X-ray spectroscopy (EDX) is preferably higher in an area of the rubber layer including the present rubber composition that is within a range of 50 µm from a contact surface with the reinforcement layer than a peak intensity of a sulfur element measured in an area of the rubber layer that is outside the above range. In the above case, a contact reaction between the reinforcement layer and the plating results in favorable formation of an adhesive layer inside the rubber layer, exhibiting favorable adhesion.

Note that measurement conditions of the above energy dispersive X-ray spectroscopy (EDX) can be as follows, for example. [Measurement Conditions of Energy Dispersive X-Ray Spectroscopy (EDX)]
- Cross section processing: ion milling
- Conditions for analysis and measurement
   Device name: scanning electron microscope S-4800 (produced by Hitachi High-Tech Corporation)
   Energy dispersive X-ray microanalyzer X-Max (produced by HORIBA, Ltd.)
   Image type: backscattered electron image
   Acceleration voltage: 15 kV
   Conductive treatment: C deposition
   Magnification: × 100k
   Element type: sulfur

Furthermore, the rubber layer including the present rubber composition preferably has a tensile stress (M₁₀₀) of equal to or more than 2.0 MPa, more preferably 2.0-12.0 MPa under an atmosphere at 25°C from the viewpoint of durability and flexibility. More specifically, when the rubber layer including the present rubber composition is used as the inner rubber layer, the above tensile stress (M₁₀₀) is preferably 7.0-10.0 MPa. Furthermore, when the rubber layer including the present rubber composition is used as the intermediate rubber layer, the above tensile stress (M₁₀₀) is preferably 3.0-5.0 MPa.

Note that the above tensile stress (M₁₀₀) can be measured in conformity with JIS K 6251, for example.

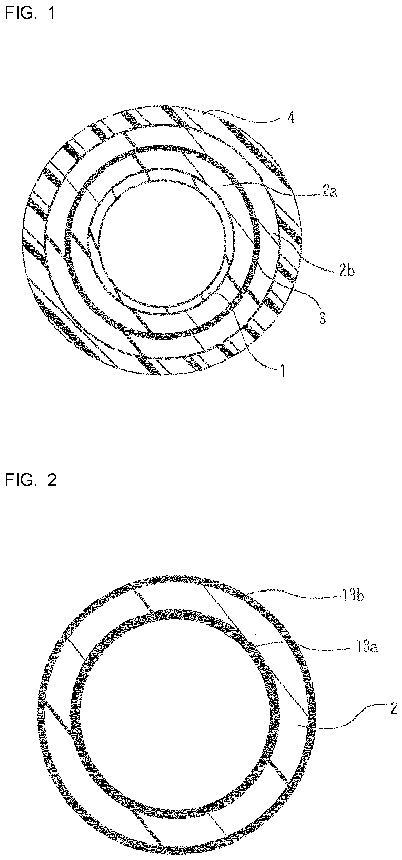

Furthermore, one embodiment of the present hose will be described with reference to the drawings. However, the present disclosure is not limited to the structures shown in the drawings. A high-pressure hose shown in FIG. 1 has a five-layer structure in which an intermediate rubber layer 2a is formed on an outer peripheral surface of an inner rubber layer 1, a reinforcement layer 3 including a plated wire is formed on an outer peripheral surface of the intermediate rubber layer 2a, an intermediate rubber layer 2b is formed on an outer peripheral surface of the reinforcement layer 3, and an outer rubber layer 4 is formed on an outer peripheral surface of the intermediate rubber layer 2b. **In** this hose, one or both of the intermediate rubber layer 2a and the intermediate rubber layer 2b is the rubber layer including the present rubber composition.

Furthermore, for example, a high-pressure hose shown in FIG. 2 has an intermediate rubber layer 2 formed on an outer peripheral surface of a reinforcement layer 13a including a plated wire, and a reinforcement layer 13b including a plated wire formed on an outer peripheral surface of the intermediate rubber layer 2. **In** this hose, the intermediate rubber layer 2 is the rubber layer including the present rubber composition.

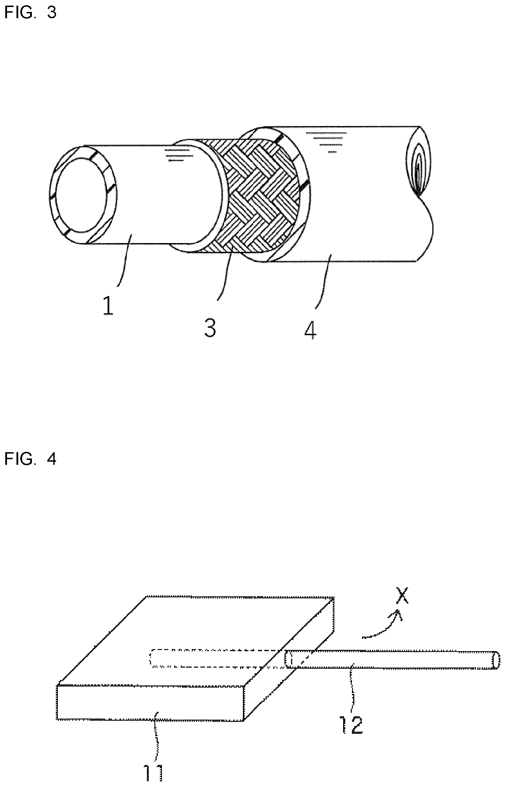

Furthermore, for example, a high-pressure hose shown in FIG. 3 has a three-layer structure in which a reinforcement layer 3 including a plated wire is formed on an outer peripheral surface of an inner rubber layer 1, and an outer rubber layer 4 is formed on an outer peripheral surface of the reinforcement layer 3. **In** this hose, the inner rubber layer 1 is the rubber layer including the present rubber composition.

Note that when the inner rubber layer 1 including compositions other than the present rubber composition is formed, as in the high-pressure hose shown in FIG. 1, materials therefor are preferably rubber having excellent oil resistance, such as, for example, acrylonitrile butadiene rubber (NBR), hydrogenated acrylonitrile butadiene rubber (HNBR), acrylic rubber (ACM), ethylene acrylate rubber (AEM), chlorinated polyethylene (CM), chlorosulfonated polyethylene (CSM), and fluororubber (FKM). These can be used alone or in combination of two or more. Among them, NBR is preferred from the viewpoint of oil resistance, strength, and cost.

Moreover, in addition to rubber such as NBR, a filler, a plasticizer, stearic acid, flowers of zinc, a vulcanizing agent, a vulcanization accelerator, a processing aid, or the like may be added as appropriate and necessary.

Furthermore, when the outer rubber layer 4 including compositions other than the present rubber composition is formed, as in the high-pressure hoses shown in FIGS. 1 and 3, materials therefor are preferably rubber having excellent weather resistance such as, for example, chloroprene rubber (CR), styrene-butadiene rubber (SBR), ethylene-propylene-diene rubber (EPDM), blend rubber of SBR and EPDM, blend rubber of NBR and EPDM, blend rubber of NBR and polyvinyl chloride (PVC), acrylic rubber (ACM), ethylene acrylate rubber (AEM), chlorinated polyethylene (CM), and chlorosulfonated polyethylene (CSM). These can be used alone or in combination of two or more. Among them, CR is preferred from the viewpoint of weather resistance, cost, and oil resistance.

Note that, in addition to rubber such as CR, a filler, a plasticizer, stearic acid, flowers of zinc, a vulcanizing agent, a vulcanization accelerator, a processing aid, or the like may be added as appropriate and necessary.

### <Production Method>

A method for producing the present hose will be described, taking one embodiment of the present disclosure shown in FIG. 1 as an example. Firstly, a rubber composition for forming an inner rubber layer is extruded onto a mandrel using an extrusion molding machine to form the inner rubber layer 1. Next, a rubber composition (present rubber composition) for forming an intermediate rubber layer is extruded onto the outer peripheral surface of the inner rubber layer 1 to form the intermediate rubber layer 2a. Next, into the outer peripheral surface of the intermediate rubber layer 2a, a plated wire such as a brass-plated wire is braided in a spiral shape to form the reinforcement layer 3. Thereafter, the rubber composition (present rubber composition) for forming an intermediate rubber layer is extruded onto the outer peripheral surface of the reinforcement layer 3 to form the intermediate rubber layer 2b. Further, a rubber composition for forming an outer rubber layer is extruded onto the outer peripheral surface of the intermediate rubber layer 2b to form the outer rubber layer 4. Finally, this laminate is vulcanized (such as steam vulcanization) under predetermined conditions (for example, 140-170°C × 10-60 minutes), thereby fabricating the high-pressure hose having the layered structure as shown in FIG. 1.

Furthermore, for example, also in a case of producing a hose having a three-layer structure of "inner rubber layer/reinforcement layer/outer rubber layer" as shown in FIG. 3, similar to the above case, the present rubber composition is extruded onto a mandrel using an extrusion molding machine to form the inner rubber layer 1, a plated wire such as a brass-plated wire is then braided in a spiral shape into the outer peripheral surface of the inner rubber layer 1 to form the reinforcement layer 3, and thereafter the rubber composition for forming an outer rubber layer is extruded onto the outer peripheral surface of the reinforcement layer 3 to form the outer rubber layer 4. Finally, this laminate is vulcanized (such as steam vulcanization) under predetermined conditions (for example, 140-170°C × 10-60 minutes), thereby fabricating the high-pressure hose having the three-layer structure.

### <Applications>

The present hose is used as an industrial hose, such as a high-pressure hydraulic hose for construction machinery and various hoses for an automobile (for example, oil hose, fuel hose, air hose, water hose, etc.). Particularly, it is suitably used as a high-pressure hose, which is used to flow a high-pressure fluid through construction machinery, civil engineering machinery, industrial machinery, vehicles and ships, etc.

### EXAMPLES

Next, Examples will be described together with Comparative Examples. However, the present disclosure is not limited to these Examples.

First, prior to Examples and Comparative Examples, the following materials were prepared.
<Diene Rubber (A)>
   - NBR (acrylonitrile butadiene rubber, Nipol DN302 produced by Zeon Corporation, AN amount: 28% by mass)
   - SBR (styrene-butadiene rubber, SBR#1500 produced by Sumitomo Chemical Co., Ltd., styrene amount: 23.5% by mass)
   - NR (natural rubber, RSS#3)
<Vulcanization Accelerator (B)>
   - Sulfenamide vulcanization accelerator (N-cyclohexyl-2-benzothiazolesulfenamide, Sanceler CM produced by Sanshin Chemical Industry Co., Ltd.)
   - Thiazole vulcanization accelerator (di-2-benzothiazolyl disulfide, Nocceler DM, Ouchi Shinko Chemical Industrial Co., Ltd.)
<N-Phenyl-N-(Trichloromethylthio)Benzenesulfonamide (C)>
   Vulkalent E/C available from Lanxess K.K.
<Sulfur (D)>
   - Insoluble sulfur (Sanfel produced by Sanshin Chemical Industry Co., Ltd.)
   - Soluble sulfur (GOLDEN FLOWER sulfur powder produced by Tsurumi Chemical Industry Co., Ltd.)
<Filler>
   - Carbon black (Seast S produced by Tokai Carbon Co., Ltd., nitrogen adsorption specific surface area: 27 m²/g, iodine adsorption number: 26 mg/g, DBP absorption number: 68 mL/100 g)
   - Calcium carbonate (Hakuenka CC produced by Shiraishi Calcium Kaisha, Ltd.)
<Plasticizer>
   - Ether ester oil (ADK Cizer RS-107 produced by ADEKA Corporation)
   - Aromatic oil (Diana Process AC-12 produced by Idemitsu Showa Shell K.K.)
   - Paraffin oil (Diana Process NM-280 produced by Idemitsu Kosan Co., Ltd.)
<Antioxidizing Agent>
   - Phenylamine antioxidizing agent (2,2,4-trimethyl-1,2-dihydroquinoline, NONFLEX RD produced by Seiko Chemical Co., Ltd.)
<Processing Aid>
   - Stearic acid (LUNAC S-70V produced by Kao Corporation)
   - Zinc oxide (Zinc Oxide No. 2 produced by Sakai Chemical Industry Co., Ltd.)

### [Examples 1-12, Comparative Examples 1-5]

Respective components shown in Table 1 below were combined in proportions shown in the table, kneaded using a kneader, thereby preparing an unvulcanized rubber composition. The resulting rubber compositions in Examples and Comparative Examples were used to evaluate the following properties. The results thereof are together shown in Table 1 below.

### <<Heat Resistance (Aging Resistance)>>

The above rubber composition was subjected to press vulcanization at 150°C × 30 minutes to fabricate a columnar vulcanized rubber sample (diameter: 29.0 mm, height: 12.5 mm). This vulcanized rubber sample was used to measure a compression set in conformity with JIS K 6262 at a temperature of 120°C for a test time of 72 hours, with a compressibility of 25%. A compression set of less than 50% was evaluated as "∘ (very good)" and a compression set of equal to or more than 50% was evaluated as "× (poor)".

### <<Adhesion>>

The above rubber composition was used to fabricate an unvulcanized rubber sheet (100 mm × 100 mm, thickness: 2 mm). One brass-plated wire (wire diameter: 0.4 mm, length: 300 mm) was placed on this rubber sheet. This was subjected to press vulcanization with a surface pressure of 2 MPa at 150°C for 30 minutes, thereby fabricating a vulcanized adhesion sample (see FIG. 4). A rubber 11 and a brass-plated wire 12 in this vulcanized adhesion sample were chucked, the brass-plated wire 12 was peeled in an arrow X direction according to the T-type peeling test of JIS K 6256, and a coverage by the rubber 11 on the surface of the brass-plated wire 12 was measured. A higher coverage indicates better adhesion between the rubber and the brass-plated wire. Note that as the above brass-plated wire, a brass-plated wire produced by Tokusen Kogyo Co., Ltd. (electroplating, plating composition: Cu/Zn = 65% by mass/35% by mass, amount of plating applied: 4 g/kg) was used.

Then, when the coverage by the rubber on the wire surface was equal to or more than 80%, it was evaluated as "∘ (very good)", and when the coverage by the rubber on the wire surface was less than 80%, it was evaluated as "× (poor)".

**Table 1**

| | | Examples | | | | | | | | | | | | Comparative Examples | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 | 3 | 4 | 5 |
| Component (A) | NBR | 100 | 100 | 100 | 100 | 100 | 100 | 100 | - | - | 100 | 100 | 100 | 100 | 100 | 100 | 100 | 100 |
| | SBR | - | - | - | - | - | - | - | 100 | - | - | - | - | - | - | - | - | - |
| | NR | - | - | - | - | - | - | - | - | 100 | - | - | - | - | - | - | - | - |
| Component (B) | Sulfenamide vulcanization accelerator | 1.6 | 1.0 | 2.0 | - | 1.0 | 1.6 | 1.6 | 1.6 | 1.6 | 1.6 | 1.3 | 1.3 | 1.6 | 1.6 | 1.6 | 1.6 | 5 |
| | Thiazole vulcanization accelerator | - | - | - | 1.6 | - | - | - | - | - | - | - | - | - | - | - | - | - |
| Component (C) | N-phenyl-N-(trichlorometh ylthio)benzene sulfonamide | 0.8 | 0.5 | 1.0 | 0.8 | 1.0 | 0.8 | 0.8 | 0.8 | 0.8 | 0.8 | 1.0 | 0.8 | 0.4 | 1.2 | 0.7 | 0.7 | 0.7 |
| Component (D) | Insoluble sulfur | 1.5 | 1.5 | 1.5 | 1.5 | 1.5 | 1.0 | 3.0 | 1.5 | 1.5 | - | 1.0 | 3.0 | 1.5 | 1.5 | 0.5 | 6.5 | 1.5 |
| | Soluble sulfur | - | - | - | - | - | - | - | - | - | 1.5 | - | - | - | - | - | - | - |
| Filler | Carbon black | 110 | 110 | 110 | 110 | 110 | 110 | 110 | 110 | 110 | 110 | 110 | 110 | 110 | 110 | 110 | 110 | 110 |
| | Calcium carbonate | 10 | 10 | 10 | 10 | 10 | 10 | 10 | 10 | 10 | 10 | 10 | 10 | 10 | 10 | 10 | 10 | 10 |
| Plasticizer | Ether ester oil | 10 | 10 | 10 | 10 | 10 | 10 | 10 | - | - | 10 | 10 | 10 | 10 | 10 | 10 | 10 | 10 |
| | Aromatic oil | - | - | - | - | - | - | - | 10 | - | - | - | - | - | - | - | - | - |
| | Paraffin oil | - | - | - | - | - | - | - | - | 10 | - | - | - | - | - | - | - | - |
| Antioxidizing agent | Phenylamine antioxidizing agent | 3 | 3 | 3 | 3 | 3 | 3 | 3 | 3 | 3 | 3 | 3 | 3 | 3 | 3 | 3 | 3 | 3 |
| Processing aid | Stearic acid | 1 | 1 | 1 | 1 | 1 | 1 | 1 | 1 | 1 | 1 | 1 | 1 | 1 | 1 | 1 | 1 | 1 |
| | Zinc oxide | 5 | 5 | 5 | 5 | 5 | 5 | 5 | 5 | 5 | 5 | 5 | 5 | 5 | 5 | 5 | 5 | 5 |
| Mass ratio: (C)/(B) | | 0.5 | 0.5 | 0.5 | 0.5 | 1.0 | 0.5 | 0.5 | 0.5 | 0.5 | 0.5 | 0.8 | 0.6 | 0.3 | 0.8 | 0.4 | 0.4 | 0.1 |
| Mass ratio: (D)/{(B)+(C)+(D)} | | 0.4 | 0.5 | 0.3 | 0.4 | 0.4 | 0.3 | 0.6 | 0.4 | 0.4 | 0.4 | 0.3 | 0.6 | 0.4 | 0.3 | 0.2 | 0.7 | 0.2 |
| Evaluation | Heat resistance | ○ | ○ | ○ | ○ | ○ | ○ | ○ | ○ | ○ | ○ | ○ | ○ | × | ○ | ○ | × | ○ |
| | Adhesion | ○ | ○ | ○ | ○ | ○ | ○ | ○ | ○ | ○ | ○ | ○ | ○ | × | × | × | ○ | × |

According to the results in Table 1 above, the rubber compositions according to Examples of the present disclosure had excellent heat resistance, high coverage by the rubber on the surface of the plated wire, and excellent adhesion between the rubber and the plated wire.

On the contrary, the rubber compositions in Comparative Examples 1 and 2 were inferior in at least one of the adhesion to the plated wire and heat resistance because of the amount of the component (C) out of the specific range of the present disclosure or other reasons. Specifically, Comparative Example 1 in which the amount of the component (C) was below the specific range of the present disclosure resulted in a low coverage by the rubber on the surface of the plated wire, inferior adhesion between the rubber and the plated wire, and also inferior heat resistance, and Comparative Example 2 in which the amount of the component (C) exceeded the specific range of the present disclosure resulted in inferior adhesion between the rubber and the plated wire. The rubber compositions in Comparative Examples 3 and 4 were inferior in at least one of the adhesion and heat resistance because of the amount of the component (D) out of the specific range of the present disclosure or other reasons. Specifically, Comparative Example 3 in which the amount of the component (D) was below the specific range of the present disclosure resulted in inferior adhesion between the rubber and the plated wire, and Comparative Example 4 in which the amount of the component (D) exceeded the specific range of the present disclosure resulted in inferior heat resistance.

The rubber composition in Comparative Example 5 resulted in inferior adhesion between the rubber and the plated wire because of the amounts of the components (C) and (B) out of the specific ranges of the present disclosure or other reasons.

### <<Peak Intensity of Sulfur Element Measured by Energy Dispersive X-Ray Spectroscopy (EDX)>>

In the sample used for the above adhesion evaluation, a peak intensity of a sulfur element measured by energy dispersive X-ray spectroscopy (EDX) in an area within a range of 50 µm from a contact surface with the above brass-plated wire, and a peak intensity of a sulfur element measured in an area of the rubber layer that was outside the above range were determined under the following conditions. As a result, for the samples in Examples 1-12, it was confirmed that the peak intensity of the sulfur element was higher in the area within the range of 50 µm from the contact surface with the brass-plated wire.

### [Measurement Conditions of Energy Dispersive X-Ray Spectroscopy (EDX)]

- Cross section processing: ion milling
- Conditions for analysis and measurement
   Device name: scanning electron microscope S-4800 (produced by Hitachi High-Tech Corporation)
   Energy dispersive X-ray microanalyzer X-Max (produced by HORIBA, Ltd.)
   Image type: backscattered electron image
   Acceleration voltage: 15 kV
   Conductive treatment: C deposition
   Magnification: × 100k
   Element type: sulfur

Although specific embodiments of the present disclosure have been described in the Examples above, the Examples are for illustrative purposes only and are not to be construed as limitative. It is intended that various modifications apparent to a person skilled in the art fall within the scope of the present disclosure.

### INDUSTRIAL APPLICABILITY

The industrial hose of the present disclosure is useful as an industrial hose having a reinforcement layer including a plated wire, such as a high-pressure hydraulic hose for construction machinery, mining machinery, and industrial vehicles (a forklift, an automated guided vehicle, etc.), as well as an engine oil hose for an automobile.

### LIST OF REFERENCE SIGNS

1: inner rubber layer
2, 2a, 2b: intermediate rubber layer
3, 13a, 13b: reinforcement layer
4: outer rubber layer

## Claims

1. An industrial hose comprising:
a rubber layer comprising a rubber composition and
a reinforcement layer comprising a plated wire, the reinforcement layer being in contact with the rubber layer,
wherein the rubber composition comprises components (A)-(D) below,
(A) a diene rubber;
(B) at least one of sulfenamide vulcanization accelerator and thiazole vulcanization accelerator;
(C) N-phenyl-N-(trichloromethylthio)benzenesulfonamide; and
(D) sulfur,
wherein an amount of the component (C) is 0.5-1.0 parts by mass and an amount of the component (D) is 1.0-3.0 parts by mass per 100 parts by mass of the component (A),
wherein a mass ratio [(C)/(B)] of the component (C) to the component (B) is 0.5-1.0, and
wherein a mass ratio [(D)/{(B)+(C)+(D)}] of the component (D) to a total amount of the components (B)-(D) is 0.3-0.6.

2. The industrial hose according to claim 1, wherein a peak intensity of a sulfur element measured by energy dispersive X-ray spectroscopy (EDX) is higher in an area of the rubber layer that is within a range of 50 µm from a contact surface with the reinforcement layer than a peak intensity of a sulfur element measured in an area of the rubber layer that is outside the range.

3. The industrial hose according to claim 1 or 2, wherein the diene rubber (A) is one or more selected from the group consisting of acrylonitrile butadiene rubber, butadiene rubber, styrene-butadiene rubber, and natural rubber.

4. The industrial hose according to claim 1 or 2, wherein the rubber composition does not comprise one or more adhesives selected from the group consisting of a cobalt adhesive, a melamine adhesive, and a resorcin adhesive.
